# EUROPÄISCHE PATENTSCHRIFT

(11) **EP 0 424 699 B1**
(45) Veröffentlichungstag und Bekanntmachung des Hinweises auf die Patenterteilung: **15.06.1994**
(21) Anmeldenummer: 90118936.5
(22) Anmeldetag: 04.10.1990
(51) Int. Cl.: H02G 15/107, H02G 15/072, H01R 13/53

(54) **Verbindungsgarnitur für Leiter eines Mittelspannungs- oder Hochspannungsnetzes**
Connection fitting for conductor of a medium or high tension network
Garniture de connexion pour conducteur d'un réseau moyenne et haute tension

(30) Priorität: 23.10.1989 DE 3935181
(43) Veröffentlichungstag der Anmeldung: 02.05.1991
(73) Patentinhaber: KARL PFISTERER ELEKTROTECHNISCHE SPEZIALARTIKEL GMBH & CO. KG, 70324 Stuttgart (DE)
(72) Erfinder: Gottschalk, Klaus, Dipl.-Ing., W-7014 Kornwestheim (DE); Bachmeier, Albert, Dipl.-Ing., W-7067 Plüderhausen (DE); Bäuerle, Gottfried, Dipl.-Ing., W-7012 Fellbach (DE); Sander, Dieter, Dipl.-Ing., W-7000 Stuttgart 75 (DE); Schächterle, Werner, W-7057 Winnenden (DE)
(74) Vertreter: Patentanwälte Bartels und Partner

(56) Entgegenhaltungen:
- EP-A- 0 015 558
- DE-A- 3 644 890

## Beschreibung

Die Erfindung betrifft eine an einer Gehäusewand zu befestigende Verbindungsgarnitur für Leiter eines Mittelspannungs- oder Hochspannungsnetzes, welche die Merkmale des Oberbegriffs des Anspruches 1 aufweist.

Bei einer bekannten Verbindungsgarnitur für Leiter eines Mittelspannungs- oder Hochspannungsnetzes in Form einer Steckbuchse (DE-A-3 644 890) ist als Sensor in dem von einer Ringdichtung gegenüber dem Innenraum des Gehäuses abgedichteten Bereich des Isolierkörpers der Verbindungsgarnitur wenigstens eine von der Gehäuseaußenseite zugängliche Elektrode eingebettet. Ausgestaltungsmöglichkeiten des Sensors sind deshalb beschränkt. Ebenso ist eine Nachrüstung ohne Bearbeitung des Isolierkörpers nur möglich, wenn der Isolierkörper bereits eine Aufnahme aufweist, in welche nachträglich eine Elektrode eingesetzt werden kann.

Bei einer bekannten Verbindungsgarnitur der eingangs genannten Art (EP-A-0 015 558) in Form eines in eine Steckbuchse einsteckbaren Kabelsteckers ist der Isolierkörper als eine Hülse ausgebildet, welche auf der Kunststoffisolation des Kabels angeordnet ist, und, wenn der Kabelstecker in die Steckbuchse eingesetzt ist, konzentrisch zur Öffnung in der Gehäusewand liegend und diese durchgreifend an der Innenwand der in das Innere des Gehäuses ragenden Steckbuchse anliegt. Zwischen diesem Isolierkörper und einem Feldsteuerungskörper, der ebenfalls auf der Kunststoffisolation des Kabels angeordnet ist, ist außerhalb des von der Gehäusewand begrenzten Innenraums des Gehäuses ein Sensor in Form einer Ringelektrode vorgesehen, der auf die Spannung des Kabels anspricht. Ferner ist an der Außenseite des Steckergehäuses eine Induktionsspule als Stromsensor angeordnet.

Der Erfindung liegt die Aufgabe zugrunde, eine Verbindungsgarnitur zu schaffen, bei der ein Sensor auch als Nachrüstbestandteil ohne Bearbeitung des Isolierkörpers angebracht werden kann und deshalb größere Freiheiten bei der Auswahl und Ausbildung des Sensors oder der Sensoren erlaubt.

Diese Aufgabe löst eine Verbindungsgarnitur mit den Merkmalen des Anspruches 1.

Dank des am Isolierkörper anlegbaren, ringförmigen Trägers kann der gewünschte Sensor in einfacher Weise in einer definierten Position gehalten werden und zwar auch im Falle einer Nachrüstung, weil ein solcher Ringkörper auf den Isolierkörper nur aufgeschoben zu werden braucht. Vor allem dann, wenn der Träger aus Silikonkautschuk besteht, bereitet es keine Schwierigkeiten, den Träger mit Druck am Isolierkörper anliegen zu lassen, da ein Träger aus Silikonkautschuk elastisch aufgeweitet werden kann.

Der Sensor oder die Sensoren können in den Träger oder je einen Träger eingebettet sein, wodurch Überschläge in einfacher Weise ausgeschlossen werden können.

Die Ausbildung des Sensors oder der Sensoren ist in verschiedener Weise möglich. Eine kapazitive oder induktive Kopplung mit dem im Durchgangskanal des Isolierkörpers liegenden Leiter hat den Vorteil, daß der Sensor nicht auf einem Hochspannungspotential liegt. Es kann deshalb problemlos eine Signalleitung aus dem Gehäuse herausgeführt werden. Besonders vorteilhaft ist bei einer kapazitiven Koppelung eine Ausbildung des Sensors als eine den Isolierkörper umfassende Ringelektrode.

Der Sensor kann aber auch elektrisch mit dem im Durchgangskanal liegenden Leiter und der Gehäusewand verbunden sein. Er liegt dann allerdings auf Hochspannungspotential. Dies ist aber beispielsweise dann ohne Bedeutung, wenn an den Sensor beispielsweise ein Wandler angeschlossen ist, welcher Signale im Schall- oder Ultraschallbereich erzeugt, die mittels eines außerhalb des Gehäuses vorgesehenen Empfängers erfaßt werden können. Besonders vorteilhaft ist eine Ausbildung des Sensors als ein lichtabgebendes Bauelement, also beispielsweise eine Leuchtdiode, wobei das Licht auch außerhalb des sichtbaren Bereiches liegen kann. Als Empfänger dieses Lichtes kommt vor allem ein Lichtwellenleiter in Frage, der an dem der Lichtquelle zugekehrten Ende mit einer Optik versehen sein kann. Lichtwellenleiter sind nämlich elektrisch gut isolierend und können deshalb ohne besondere Maßnahmen aus dem Inneren des Gehäuses herausgeführt werden. Sofern eine ausreichende Isolation gewährleistet ist, könnte als Empfänger selbstverständlich aber auch ein lichtempfindliches Halbleiterelement vorgesehen werden. Weiterhin kann auch ein Sensor mit einer Anzeigeeinrichtung, die auch mechanisch arbeiten kann, vorgesehen werden, deren Anzeige optisch nach außen übertragen wird.

Im folgenden ist die Erfindung anhand von in der Zeichnung dargestellten Ausführungsbeispielen im einzelnen erläutert. Es zeigen
- Fig. 1: einen das Lösungsprinzip schematisch darstellenden Schnitt,
- Fig. 2: einen Schnitt durch ein konkret dargestelltes erstes Ausführungsbeispiel,
- Fig. 3: einen Schnitt durch ein schematisch dargestelltes zweites Ausführungsbeispiel.

Eine Verbindungsgarnitur in Form einer Steckbuchse 1, in die ein nicht dargestellter Kabelstecker einsteckbar ist, weist einen aus Gießharz bestehenden Isolierkörper 2 auf. Letzterer ist in bekannter Weise mit einem sich von der einen Stirnfläche her in den Isolierkörper 2 hinein erstreckenden und in dieser Richtung sich verjüngenden, konischen Kanal 3 versehen, der konzentrisch zur Längsachse des Isolierkörpers 2 liegt und sich bis zu einer zu ihm offenen Kontaktbuchse 4 erstreckt. Diese ist in den Isolierkörper 2 konzentrisch zum Kanal 3 eingegossen. Sie steht vorzugsweise über die im Druchmesser kleinere Stirnfläche des Isolierkörpers 2 über, um hier die Verbindung mit dem im Inneren des Gehäuses liegenden Leiter herstellen zu können. Die Kontaktbuchse 4 dient der Aufnahme des Kontaktkörpers des Kabelsteckers, der im eingesteckten Zustand mit der Außenmantelfläche eines außen konischen Dichtungskörpers an der Wandung des Kanals 3 anliegt und dadurch einen elektrisch dichten Verschluß gegenüber der Kontaktbuchse 4 bildet. Nahe dem an den Kanal 3 anschließenden Ende der Kontaktbuchse 4 ist mit dieser mechanisch und elektrisch ein Feldsteuerkörper 5 verbunden, der das an die Kontaktbuchse 4 anschließende Ende des Kanales 3 im Abstand umgebend in den Isolierkörper 2 eingebettet ist.

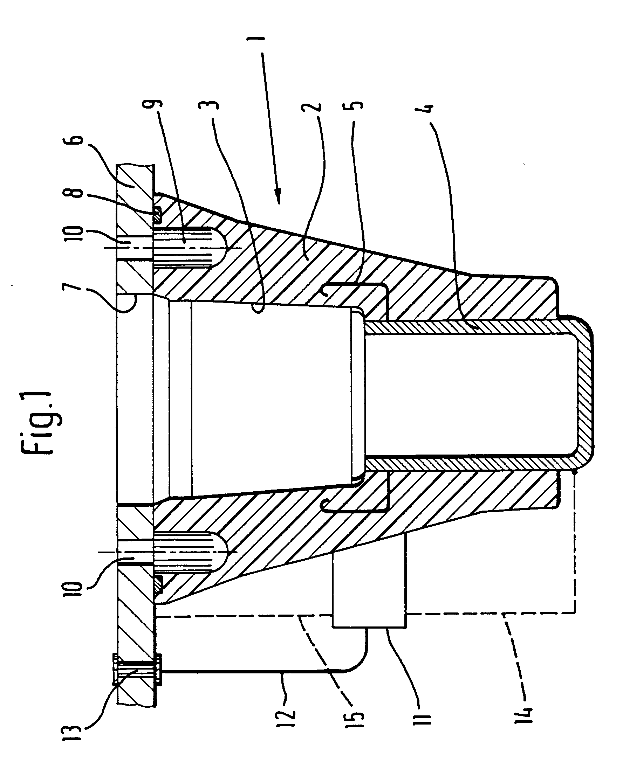

Der Isolierkörper 2 wird, wie Fig. 1 zeigt, so an der Innenseite einer Gehäusewand 6 eines im übrigen nicht dargestellten Gehäuses angeordnet, daß der Kanal 3 auf eine das Einführen des Kabelstekkers gestattende Öffnung 7 in der Gehäusewand 6 ausgerichtet ist. Dabei liegt die ringförmige Stirnfläche des Isolierkörpers 2 unter Zwischenlage einer Ringdichtung 8 an der Innenseite der Gehäusewand 6 an. Innerhalb der von der Ringdichtung 8 begrenzten Ringzone liegen in den Isolierkörper 2 eingebettete Gewindebuchsen 9, in welche nicht dargestellte Schrauben eingreifen, welche von außen her Bohrungen 10 der Gehäusewand 6 durchdringen.

Außerhalb von dem im Inneren des Gehäuses liegenden Isolierkörper 2 ist wenigstens ein dem Isolierkörper 2 zugeordneter Sensor 11 angeordnet, welcher auf die Spannung, welche die Kontaktbuchse 4 und der Feldsteuerkörper 5 führen und/oder den Strom ansprechen, welcher bei eingestecktem Stecker über diesen und die Kontaktbuchse 4 fließt. Vorzugsweise wird der Sensor 11 von einem Träger getragen, der am Isolierkörper 2 festlegbar ist. Es kommen aber auch Sensoren in Frage, welche ohne Träger am Isolierkörper festlegbar sind oder die von ihren Verbindungsleitungen getragen werden und deshalb keiner Festlegung am Isolierkörper 2 bedürfen.

Je nach Art des Sensors oder der Sensoren ist eine Signalübertragung nach außen ohne eine Signalleitung möglich. In vielen Fällen wird jedoch eine Signalleitung 12 erforderlich sein, die mit Hilfe einer Durchführung 13 durch die Gehäusewand 6 hindurch nach außen geführt werden kann. Der Sensor 11 kann auch eine elektrische Verbindung 14 mit der Kontaktbuchse 4 und eine elektrische Verbindung 15 mit der auf Erdpotential liegenden Gehäusewand 6 benötigen.

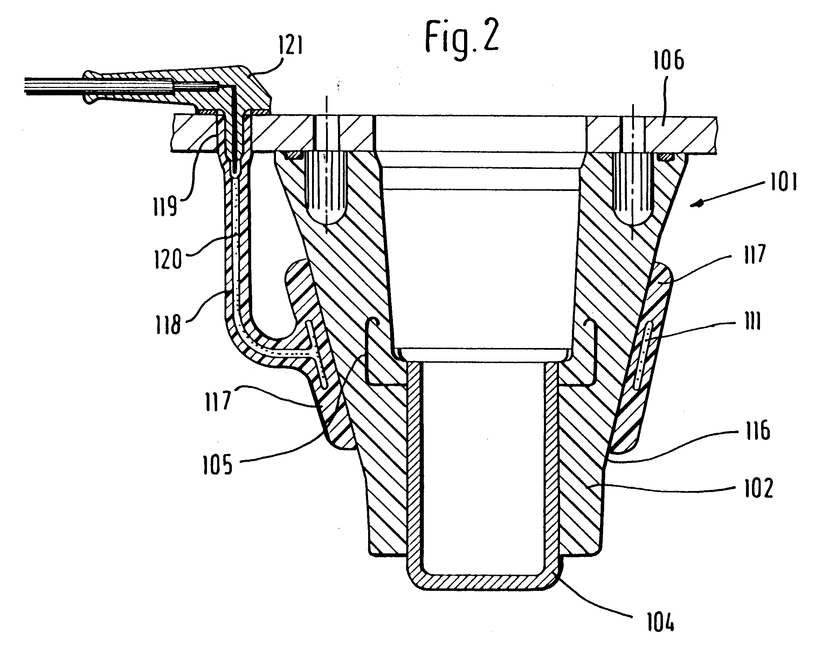

Bei dem in Fig. 2 dargestellten Ausführungsbeispiel ist eine Steckbuchse 101 vorgesehen, die wie die vorstehend beschriebene Steckbuchse 1 ausgebildet und an der Innenseite einer Gehäusewand 106 eines im übrigen nicht dargestellten Gehäuses, beispielsweise eines Gehäuses eines Mittel- oder Hochspannungschalters, befestigt ist. Wegen Einzelheiten bezüglich der Steckbuchse 101 kann deshalb auf die Ausführungen zur Steckbuchse 1 verwiesen werden.

Bei dem Ausführungsbeispiel gemäß Fig. 2 ist der nachrüstbare Sensor als eine Ringelektrode 111 in Form einer konischen Hülse ausgebildet, deren Konuswinkel gleich demjenigen der konischen Außenmantelfläche 116 des Isolierkörpers 102 gewählt ist. Die Ringelektrode 111 ist in einen Ringkörper 117 aus Silikonkautschuk vollständig eingebettet, der ebenfalls die Form einer konischen Hülse hat. Im Ausführungsbeispiel ist nicht nur der Konuswinkel der Innenwand des Ringkörpers 117, sondern auch derjenige der Außenwand gleich dem Konuswinkel der Außenmantelfläche 116 gewählt.

Die Ringelektrode 111 könnte aus Metall bestehen. Im Ausführungsgeispiel besteht sie jedoch aus einem elektrisch leitenden Silikonkautschuk, wodurch nicht nur der als Träger dienende Ringkörper 117, sondern auch die Ringelektrode 111 elastisch aufgeweitet werden können, damit der Ringkörper 117 unter Druck an der Außenmantelfläche 116 anliegt, wenn er auf den Isolierkörper 102 soweit aufgeschoben ist, daß die Ringelektrode 111 sich in der vorgesehenen Position befindet. Im Ausführungsbeispiel umgibt die Ringelektrode 111 in dieser Position den Feldsteuerkörper 105 in dessen zylindrischem Abschnitt.

An den Ringkörper 117 ist außen in Höhe der Ringelektrode 111 ein Schlauch 118 angeformt, der bis zu einer die Gehäusewand 106 durchdringenden Bohrung 119 geführt und in dieser festgelegt ist. In diesem Schlauch 118 liegt ein einstückig mit der Ringelektrode 111 ausgebildeter Strang, der als Signalleitung 120 dient und dessen der Ringelektrode 111 abgekehrtes Ende mit einer in den Schlauch 118 integrierten Steckbuchse elektrisch leitend verbunden ist. In diese Steckbuchse ist von der Außenseite des Gehäuses her ein Steckerstift eines Verbindungssteckers 121 einsteckbar, mittels dessen nicht nur die Signalleitung 120 kontaktierbar, sondern auch der Schlauch 118 und die Bohrung 119 dicht verschließbar sind.

Infolge der kapazitiven Kopplung der Ringelektrode 111 mit dem auf dem Potential der Kontaktbuchse 104 liegenden Feldsteuerkörper 105 sowie wegen der relativ großen wirksamen Fläche der Ringelektrode 111, vermag diese ein die Spannung repräsentierendes Signal ausreichender Stärke zu liefern.

Dadurch, daß die Ringelektrode 111 in das elektrisch isolierende Material des Ringkörper 117 eingebettet ist, ist sie doppelt isoliert. Die Isolation der Ringelektrode, die zweckmäßigerweise unter Berücksichtigung von DIN VDE 0681 T.7 und DIN VDE 0670 T.7 Schutzart B ausgeführt ist, verhindert einen Durchschlag zur Ringelektrode und damit zu deren Schnittstelle von der Kontaktbuchse 104 aus.

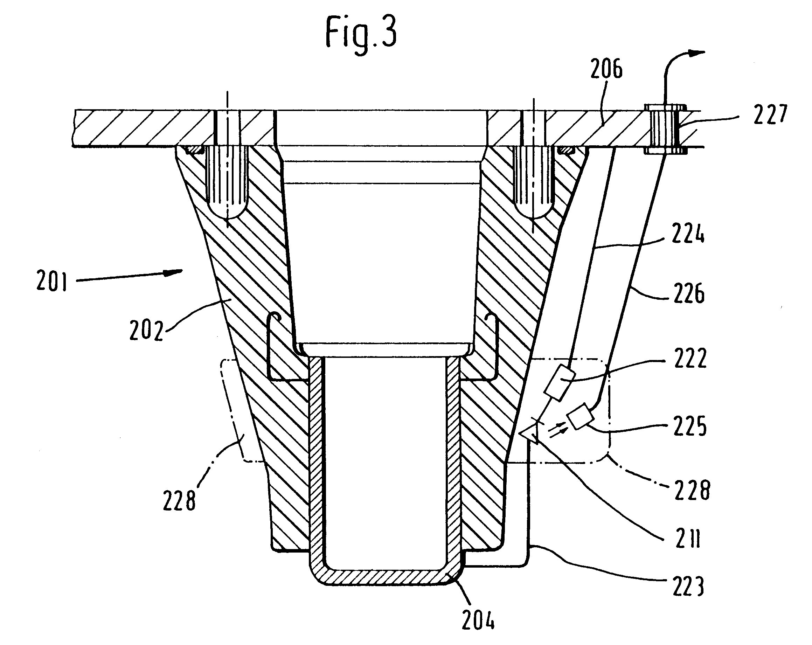

In Fig. 3 ist ein Ausführungsbeispiel mit einem Sensor aus derjenigen Gruppe dargestellt, die eine elektrische Verbindung mit dem Potential des Leiters und Erdpotential benötigt. Da der Isolierkörper 202 der in Fig. 3 dargestellten Steckbuchse 201 in gleicher Weise ausgebildet ist wie der Isolierkörper 2 des Ausführungsbeispiels gemäß Fig. 1, wird auf die dortigen Ausführungen Bezug genommen.

Als Sensor ist eine Leuchtdiode 211 vorgesehen, die in Reihe mit einem Widerstand 222 geschaltet ist. Statt eines solchen ohmschen Widerstandes könnte aber auch ein Kondensator verwendet werden. Die Reihenschaltung ist einerseits über eine Verbindungsleitung 223 mit dem aus dem Isolierkörper 202 herausragenden Ende der Kontaktbuchse 204 und andererseits über eine Verbindungsleitung 224 mit der auf Erdpotential liegenden Gehäusewand 206 elektrisch leitend verbunden. Die Intensität der Lichtemission der Leuchtdiode 211 ist damit abhängig von der Höhe der Spannung, welche die Kontaktbuchse 204 führt.

Das von der Leuchtdiode 211 abgestrahlte Licht wird von einer Optik 225 aufgefangen, die am einen Ende eines aus Glasfasern bestehenden Lichtwellenleiters 226 angeordnet ist. Über diesen Lichtwellenleiter 226, der mit Hilfe einer Durchführung 227 durch die Gehäusewand 206 hindurchgeführt ist, wird das von der Optik 225 empfangene Licht nach außen geleitet und dort mit Hilfe eines lichtelektrischen Wandlers in ein elektrisches Signal umgesetzt. Wegen der hohen elektrischen Isolationsfähigkeit des Lichtwellenleiters 226 könnte die Optik 225 auf Hochspannungspotential liegen, ohne daß dadurch Probleme auftreten würden.

Da nur die Leuchtdiode 211 und die Optik 225 oder, wenn diese fehlt, das auf die Leuchtdiode 211 ausgerichtete Ende des Lichtwellenleiters 226 in einer räumlich definierten Lage zueinander gehalten werden müssen, würde es genügen, diese beiden Elemente auf einem Träger anzuordnen. In Fig. 3 ist deshalb ein solcher Träger 228 nur strichpunktiert und schematisch angedeutet. In der Regel wird es jedoch zweckmäßig sein, auf diesem Träger, welcher durch die Verbindungsleitungen 223 und 224 in der gewünschten Lage gehalten werden könnte, auch weitere vorhandene Bauelemente wie den Widerstand 222 anzuordnen.

Sofern der Träger 228 vorgesehen ist, kann dieser einen den Isolierkörper 202 umfassenden Teil aufweisen, damit der Träger 228 wie der Ringkörper 117 auf den Isolierkörper 202 aufgeschoben und dadurch auf diesem positioniert werden kann.

## Patentansprüche

1. An einer Gehäusewand (6; 106; 206) zu befestigende Verbindungsgarnitur (1; 101; 201) für Leiter eines Mittelspannungs- oder Hochspannungsnetzes mit
a) einem Isolierkörper (2; 102; 202), der
a1) einen auf eine Öffnung (7) in der Gehäusewand (6; 106; 206) auszurichtenden Durchgangskanal (3) für einen Leiter aufweist, dessen Spannung und/oder Stromfluß angezeigt und/oder gemessen werden soll,
a2) zumindest teilweise in dem von der Gehäusewand (6; 106; 206) begrenzten Innenraum des Gehäuses anzuordnen ist,
b) wenigstens einem Sensor (11; 111; 211), der auf die Spannung und/oder den Stromfluß des im Durchgangskanal (3) liegenden Leiters anspricht,
dadurch gekennzeichnet, daß
c) der Sensor (11; 111; 211) von einem Träger (117; 228) getragen außerhalb des Isolierkörpers (2; 102; 202) angeordnet ist und
d) der Träger (117; 228) als ein Ringkörper ausgebildet ist, der für eine auch als Nachrüstung ausführbare Anordnung des Sensors (11; 111; 211) im Inneren des Gehäuses den Isolierkörper (2; 102; 202) umfaßt und an ihm anliegt.

2. Verbindungsgarnitur nach Anspruch 1, dadurch gekennzeichnet, daß der Träger (117; 228) aus Silikonkautschuk besteht.

3. Verbindungsgarnitur nach Anspruch 1 oder 2, dadurch gekennzeichnet, daß der Ringkörper (117) unter mechanischer Spannung am Isolierkörper (102) anliegt.

4. Verbindungsgarnitur nach einem der Ansprüche 1 bis 3, dadurch gekennzeichnet, daß bei einer konischen Außenmantelfläche des den Ringkörper (117; 228) tragenden Teils des Isolierkörpers (102; 202) der Ringkörper mit einer korrespondierenden Innenkonusfläche versehen ist.

5. Verbindungsgarnitur nach einem der Ansprüche 1 bis 4, dadurch gekennzeichnet, daß der Sensor (111) in den Träger (117) eingebettet ist.

6. Verbindungsgarnitur nach einem der Ansprüche 1 bis 5, dadurch gekennzeichnet, daß der Sensor (111) direkt oder indirekt mit dem im Durchgangskanal liegenden Leiter kapazitiv oder induktiv gekoppelt ist.

7. Verbindungsgarnitur nach Anspruch 6, dadurch gekennzeichnet, daß der Sensor als eine den Isolierkörper (102) umfassende Ringelektrode (111) ausgebildet ist.

8. Verbindungsgarnitur nach einem der Ansprüche 1 bis 6, dadurch gekennzeichnet, daß der Sensor (211) elektrisch mit dem im Durchgangskanal liegenden Leiter und der geerdeten Gehäusewand (206) verbunden ist.

9. Verbindungsgarnitur nach Anspruch 8, dadurch gekennzeichent, daß dem Sensor ein ebenfalls im Inneren des Gehäuses anzuordnender und mit ihm vorzugsweise zu einer Baueinheit vereinigter Schall- oder Ultraschallsender zugeordnet ist.

10. Verbindungsgarnitur nach Anspruch 8, dadurch gekennzeichnet, daß an den Sensor (211) wenigstens eine elektrisch isolierender Lichtwellenleiter (226) angeschlossen ist, der durch die Gehäusewand (206) hindurch nach außen geführt ist.

11. Verbindungsgarnitur nach Anspruch 10, dadurch gekennzeichnet, daß der Sensor (211) ein im aktivierten Zustand lichtaussendendes Bauelement ist.

## Claims

1. A connection fitting (1; 101; 201) to be connected to a casing wall (6; 106; 206) for conductors of a medium voltage or high voltage grid comprising:
a) an insulator (2; 102; 202), which:
a1) comprises a penetrating channel (3) for a conductor, which channel is directed onto an aperture (7) in the casing wall (6; 106; 206), the voltage and/or current flow of which conductor is to be displayed and/or measured; and
a2) is to be disposed at least partially in the inner chamber of the casing, which inner chamber is delimited by the casing wall (6; 106; 206);
b) at least one sensor (11; 111; 211) which addresses the voltage and/or the current flow of the conductor located in the throughput channel (3);
characterised in that:
c) the sensor (11; 111; 211), supported by a carrier (111; 228), is disposed outside the insulator (2; 102; 202); and
d) the carrier (117; 228) is formed as an annular member, which incorporates the insulator (2; 102; 202) for an arrangement of the sensor (11; 111; 211) that can also be in a retrofit form, and which abuts on this insulator.

2. Connection fitting according to Claim 1, characterised in that the carrier (117; 228) consists of silicon rubber.

3. Connection fitting according to Claim 1 or 2, characterised in that the annular body (117) abuts the insulator (102) under mechanical tension.

4. Connection fitting according to one of the Claims 1 to 3, characterised in that, in the case of a conical external generated surface of the part of the annular member (117; 228) of the insulator (102, 202), the annular member is provided with corresponding inner conical surfaces.

5. Connection fitting according to any one Claims 1 to 4, characterised in that the sensor (111) is embedded in the support (117).

6. Connection fitting according to any one of Claims 1 to 5, characterised in that the sensor (111) is directly or indirectly coupled in a capacitive or inductive manner to the conductor located in the throughput channel.

7. Connection fitting according to Claim 6, characterised in that the sensor is formed as an annular electrode (111) surrounding the insulating member (102).

8. Connection fitting according to any one of Claims 1 to 6, characterised in that the sensor (211) is electrically connected to the conductor located in the throughput channel and to the earthed casing wall (206).

9. Connection fitting according to Claim 8, characterised in that there is associated with the sensor a sonic or ultrasonic transmitter which is likewise to be disposed in the interior of the casing and is preferably combined with the casing to form one component.

10. Connection fitting according to Claim 8, characterised in that at least one electrically insulating optical conductor (226) is connected to the sensor (211), which optical conductor is guided to the exterior through the casing wall (206).

11. Connection fitting according to Claim 10, characterised in that the sensor (211) is, in the activated state, a light transmitting component.

## Revendications

1. Monture de connexion (1 ; 101 ; 201) destinée à se fixer sur une cloison de boîtier (6 ; 106 ; 206), pour conducteur d'un réseau moyenne tension ou haute tension, comprenant :
a) un corps isolant (2 ; 102 ; 202) qui :
a1) comporte un canal de traversée (3) destiné à être dirigé vers un trou (7) de la cloison (6 ; 106 ; 206) du boîtier et qui est destiné à un conducteur dont il faut afficher et/ou mesurer la tension et/ou l'intensité,
a2) est destiné à être disposé au moins partiellement dans le volume intérieur du boîtier, qui est délimité par la cloison de boîtier (6 ; 106 ; 206),
b) au moins un détecteur (11 ; 111 ; 211) qui répond à la tension et/ou à l'intensité du conducteur situé dans le canal de traversée (3),
caractérisée en ce que :
c) le détecteur (11 ; 111 ; 211) est porté par un support (117 ; 228) et disposé à l'extérieur du corps isolant (2 ; 102 ; 202) et
d) le support (117 ; 228) est conformé en corps annulaire qui entoure le corps isolant (2 ; 102 ; 202) et s'applique contre lui pour que le montage du détecteur (11; 11 ; 211) à l'intérieur du boîtier soit aussi exécutable sous forme d'un équipement à postériori.

2. Monture de connexion selon la revendication 1, caractérisée en ce que le support (117 ; 228) est en caoutchouc au silicone.

3. Monture de connexion selon la revendication 1 ou 2, caractérisée en ce que le corps annulaire (117) s'applique contre le corps isolant (102) sous contrainte mécanique.

4. Monture de connexion selon l'une des revendications 1 à 3, caractérisée en ce que, lorsque la surface de l'enveloppe extérieure de la partie du corps isolant (102 ; 202) qui supporte le corps annulaire (117 ; 228) est conique, le corps annulaire comporte une surface intérieure conique correspondante.

5. Monture de connexion selon l'une des revendications 1 à 4, caractérisée en ce que le détecteur (111) est noyé dans le support (117).

6. Monture de connexion selon l'une des revendications 1 à 5, caractérisée en ce que le détecteur (111) est couplé par capacité ou par induction directement ou indirectement au conducteur situé dans le canal de traversée.

7. Monture de connexion selon la revendication 6, caractérisée en ce que le détecteur est conformé en électrode annulaire (111) entourant le corps isolant (102).

8. Monture de connexion selon l'une des revendications 1 à 6, caractérisée en ce que le détecteur (211) est relié électriquement au conducteur situé dans le canal de traversée et à la cloison (206) du boîtier qui est à la terre.

9. Monture de connexion selon la revendication 8, caractérisée en ce qu'un émetteur sonore ou ultra-sonore devant être également disposé à l'intérieur du boîtier et de préférence assemblé sous forme d'un module avec le détecteur est associé à ce dernier.

10. Monture de connexion selon la revendication 8, caractérisée en ce qu'au moins un guide d'ondes lumineuses (226) isolant électriquement et menant vers l'extérieur à travers la cloison (206) du boîtier est raccordé au détecteur (211).

11. Monture de connexion selon la revendication 10, caractérisée en ce que le détecteur (211) est un composant émettant une lumière lorsqu'il est à l'état activé.
